# EUROPÄISCHE PATENTSCHRIFT

(11) **EP 1 975 064 B1**
(45) Veröffentlichungstag und Bekanntmachung des Hinweises auf die Patenterteilung: **19.10.2011**
(21) Anmeldenummer: 08001680.1
(22) Anmeldetag: 30.01.2008
(51) Int. Cl.: B64D 27/20, B64D 27/26

(54) **Luftfahrzeug**
Aircraft
Aéronef

(30) Priorität: 28.03.2007 DE 102007015373
(43) Veröffentlichungstag der Anmeldung: 01.10.2008
(73) Patentinhaber: EADS Deutschland GmbH, 85521 Ottobrunn (DE)
(72) Erfinder: Schwarz, Michael, Dr., 88682 Salem (DE)
(74) Vertreter: Riegel, Werner

(56) Entgegenhaltungen:
- WO-A-01/53151
- FR-A- 1 006 380
- FR-A- 1 443 200
- GB-A- 762 785
- GB-A- 851 916
- US-A- 2 379 226
- US-A- 2 815 184

## Beschreibung

Die Erfindung betrifft ein Luftfahrzeug mit Antriebseinheiten.

Bei Luftfahrzeugen sind bei Verwendung von mehreren Antriebseinheiten diese üblicherweise symmetrisch zu einer durch die Längs- und die Hochachse des Fluggerätes aufgespannten Ebene angeordnet, z.B. in Triebwerksgondeln am Flügel (z.B. Airbus A380), an Pylonen seitlich am Rumpf (z.B. Learjet 60 Windrose) oder nebeneinander angeordnet im Rumpf (z.B. Eurofighter).

Diese Konfiguration gewährleistet bei Luftfahrzeugen mit Fahrwerk die beim Start zur Rotation notwendige Freigängigkeit im Heckbereich.

Unbemannte Luftfahrzeuge verwenden üblicherweise dieselbe Antriebskonfiguration, wobei hier bei einem Katapultstart die Notwendigkeit zur Freigängigkeit im Heckbereich nicht gegeben ist. Unbemannte Luftfahrzeuge können z.B. als Zieldarstellungsdrohnen (z.B. Do-DT 35 der Firma EADS) oder Aufklärungsdrohnen (z.B. CL 289 der Firma EADS) verwendet werden.

Die aus dem Stand der Technik bekannten unbemannten Luftfahrzeuge unterscheiden sich erheblich hinsichtlich ihrer aerodynamischen Eigenschaften. Weitere Unterschiede ergeben sich hinsichtlich Geschwindigkeit und maximal möglicher Nutzlast.

Aus FR 1.443.200 ist ein Luftfahrzeug bekannt, bei welchem vier Antriebseinheiten rotationssymmetrisch im hinteren Bereich des Luftfahrzeugs angeordnet sind.

Aus US 2006/0054739 A1 ist ein Luftfahrzeug mit einer Vielzahl von Turbinen bekannt. Diese Turbinen sind in Triebwerksgondeln zusammengefasst. Die Form der Triebwerksgondeln wird entsprechend ihres bestimmungsgemäßen Einsatzes am Rumpf des Luftfahrzeugs gewählt.

Aus US 3,285,175 ist eine Rakete mit kreisförmig angeordneten Antriebseinheiten bekannt.

Aus GB 924,078 ist ein Flugzeug bekannt, welches am Heck zwei seitlich angeordnete Antriebseinheiten umfasst. Ferner weist das Flugzeug zwei Antriebseinheiten auf, welche im Innern des Flugzeugs angeordnet sind, wobei die eine Antriebseinheit einen zur Rumpfoberseite des Flugzeugs führenden Lufteinlass und die andere Antriebseinheit einen zur Rumpfunterseite des Flugzeugs führenden Lufteinlassaufweist.

Aus FR 1 006 380 und GB 851 916 A sind jeweils Fluggeräte mit Antriebseinheiten bekannt, bei welchen die Antriebseinheiten aus einer Ruheposition in eine Betriebsposition geschwenkt werden.

Aufgabe der Erfindung ist es, ein Luftfahrzeug mit zwei Antriebseinheiten mit verbesserten aerodynamischen Eigenschaften anzugeben.

Diese Aufgaben werden durch das Luftfahrzeug gemäß den Merkmalen des Anspruchs 1 gelöst.

Vorteilhafte Ausführungen der Erfindung sind Gegenstand von Unteransprüchen.

Das erfindungsgemäße Luftfahrzeug zeichnet sich durch am Rumpf des Luftfahrzeugs vorhandene Einbuchtungen zur Aufnahme von Antriebseinheiten aus. Die Antriebseinheiten sind während des Betriebs in den hierfür vorgesehenen Positionen in einer durch die Längs- und Hochachse, auch als Roll- und Gierachse bezeichnet, aufgespannten Ebene angeordnet, wobei die beiden Antriebseinheiten hierbei übereinander angeordnet sind. Der Lufteinlass der einen Antriebseinheit befindet sich dabei oberhalb des Rumpfes des Luftfahrzeugs und der Lufteinlass der anderen Antriebseinheit unterhalb des Rumpfes des Luftfahrzeugs.

Eine Anordnung von Antriebseinheiten, z.B. Triebwerken übereinander anstatt nebeneinander trägt ohne Änderung der Schwerpunktlage zur Richtungsstabilität bei, da die projizierte Fläche in Querrichtung des Luftfahrzeuges im Heckbereich vergrößert wird.

Eine erfindungsgemäße Antriebseinheit umfasst das Triebwerk, ein Gehäuse mit einem Lufteinlass, Mittel zur lösbaren Befestigung der Antriebseinheit am Rumpf eines Luftfahrzeugs sowie Mittel zur Herstellung einer lösbaren Verbindung von elektrischen Versorgungs- und Datenleitungen sowie Kraftstoffleitungen zwischen der Antriebseinheit und dem Rumpf des Luftfahrzeugs.

Zweckmäßig ist die Antriebeinheit als Modul aufgebaut. Dadurch wird ein schnelles Ein- und Ausbauen der Antriebseinheit gewährleistet.
Außerdem erlaubt ein modularer Aufbau der Antriebseinheit eine einfache Anpassung des Luftfahrzeugs an verschiedenen Missionsaufgaben. Durch die Verwendung von Antriebseinheiten mit leistungsfähigen Triebwerken können z.B. bei gleicher im Luftfahrzeug mitgeführter Treibstoffmenge höhere Geschwindigkeiten erreicht werden, als bei Antriebseinheiten mit weniger leistungsfähigen Triebwerken. Mit Letzteren ist es aber möglich, eine Missionsaufgabe mit einer hohen geforderten Reichweite zu erfüllen.

Durch die modular verwendbaren Antriebseinheiten können die Antriebseinheiten getrennt von Luftfahrzeug getestet und gewartet werden. Das Luftfahrzeug steht somit für weitere Missionsaufgaben zur Verfügung. Die Bodenzeiten des Luftfahrzeugs werden somit wesentlich reduziert.

Die Erfindung sowie vorteilhafte Ausführungen werden im Weiteren anhand von Zeichnungen näher erläutert. Es zeigen:
- Fig. 1: in Schnittdarstellung ein erfindungsgemäßes Luftfahrzeug in einer ersten Ausführungsform,
- Fig. 2: in Schnittdarstellung ein erfindungsgemäßes Luftfahrzeug in einer zweiten Ausführungsform.

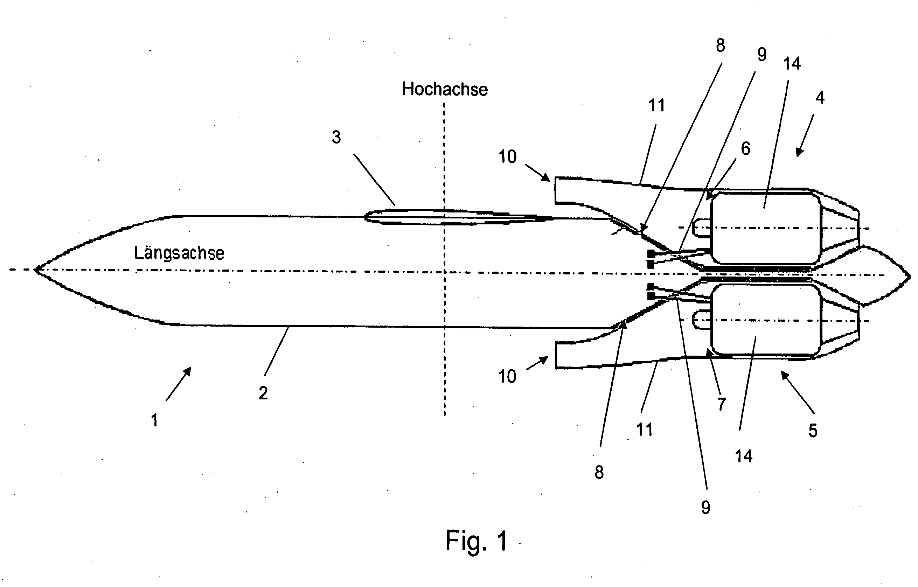

Fig. 1 zeigt ein erfindungsgemäßes Luftfahrzeug in einer ersten Ausführungsform. Das Luftfahrzeug 1 besteht im Wesentlichen aus einem Rumpf 2, Tragflächen 3 sowie Antriebseinheiten 4, 5. Die Tragflächen 3 sind beispielhaft entsprechend eines Schulterdeckers bündig mit der Rumpfoberkante angeordnet. Die Tragflächen 3 können aber auch je nach Anforderung an das Luftfahrzeug entsprechend eines Tiefdeckers unterhalb des Rumpfes oder entsprechend eines Mitteldeckers in mittlerer Höhe des Rumpfes oder entsprechend eines Hochdeckers über dem Rumpf angeordnet sein.

Die beiden Antriebseinheiten 4, 5, welche als Module aufgebaut sind, sind vorteilhaft identisch. Damit ist es möglich die beiden Antriebseinheiten 4, 5 an den hierfür vorgesehenen Positionen 6 und 7 auszutauschen, ohne daß es im Betrieb zu Veränderungen in den Flugeigenschaften des Luftfahrzeugs 1 kommt. Mit anderen Worten eine Antriebseinheit 4, 5 kann wahlweise in Position 6 oder Position 7 mit dem Rumpf 2 des Luftfahrzeugs 1 verbunden werden.

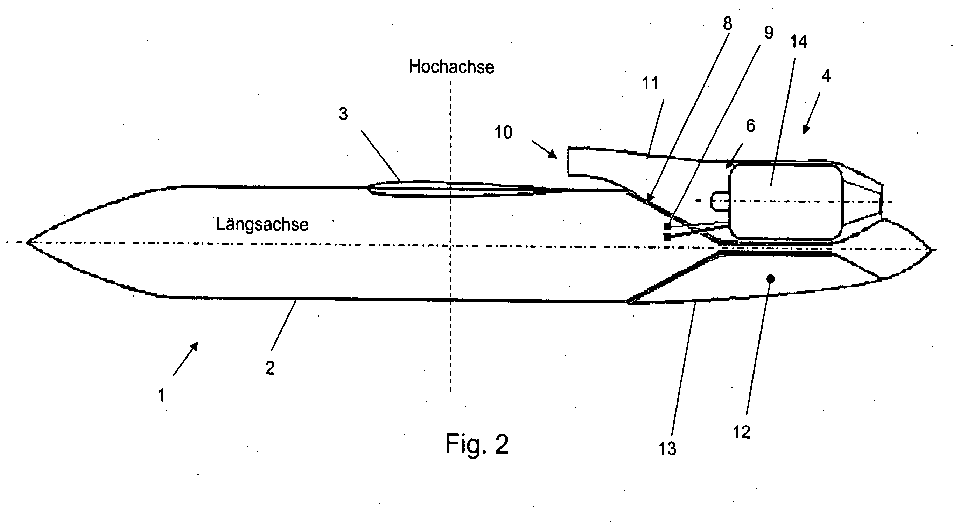

Im Rumpf 2 des Luftfahrzeugs 1 sind erfindungsgemäß Einbuchtungen 12 (Fig. 2) zur Aufnahme der Antriebseinheiten 4, 5 vorhanden. Durch diese Einbuchtungen wird ein geringer Querschnitt senkrecht zur Längsachse und somit geringer Luftwiderstand im bestimmungsgemäßen Einsatz des Luftfahrzeugs 1 gewährleistet.

Die beiden Antriebseinheiten 4, 5 sind vorteilhaft symmetrisch zu einer Ebene, in der die Hochachse des Luftfahrzeugs die Flächennormale bildet, angeordnet. Zweckmäßig wird diese Ebene durch die Quer- und Längsachse aufgespannt.

Eine Antriebseinheit 4, 5 besteht dabei im Wesentlichen aus einem Gehäuse 11 mit einer Lufteinlassöffnung 10 in Flugrichtung, einem Triebwerk 14 sowie Mittel 8, 9 zur Herstellung einer Verbindung zwischen der Antriebseinheit 4, 5 und dem Rumpf 2 des Luftfahrzeugs 1.

Der Lufteinlass 10 der einen Antriebseinheit 4 befindet sich oberhalb des Rumpfes 2 des Luftfahrzeugs 1, der Lufteinlass 10 der anderen Antriebseinheit 5 befindet sich gemäß der Erfindung unterhalb des Rumpfes 2 des Luftfahrzeugs 1. Zweckmäßig ist der Lufteinlass 10 in das Gehäuse 11 der Antriebseinheiten 4, 5 integriert. Die je nach Anwendungsfall nötige Geometrie des Lufteinlasses 10 kann somit direkt in die Antriebseinheit 4, 5 integriert werden und ist somit unabhängig vom Rumpf 2 des Luftfahrzeugs 1.

Die beiden Antriebseinheiten 4, 5 sind vorteilhaft lösbar mit dem Rumpf 2 des Luftfahrzeugs 1 verbunden. Hierzu sind am Rumpf 2 des Luftfahrzeugs 1 Mittel 8 zur Halterung der Antriebseinheiten 4, 5 und Mittel 9 zur Herstellung einer Verbindung von elektrischen Versorgungs- und Datenleitungen sowie Kraftstoffleitungen zwischen dem Rumpf 2 des Luftfahrzeugs 1 und den Antriebseinheiten 4, 5 vorgesehen.

Unter dem Ausdruck einer lösbaren Verbindung zwischen dem Rumpf 2 des Luftfahrzeugs 1 und einer Antriebseinheit 4, 5 wird im Folgenden verstanden, daß zum Abtrennen der Antriebseinheit 4, 5 vom Rumpf 2 des Luftfahrzeugs lediglich die Verbindungsmittelmittel 8, 9 geöffnet werden müssen. Das Lösen der Antriebseinheit 4, 5 soll im Wesentlichen nicht durch das Entfernen etwaiger Rumpfteile einhergehen.

Bei den Mittel 8 zur Halterung der Antriebseinheiten 4, 5 kann es sich z.B. um Führungsschienen mit einem an der bestimmungsgemäßen Position der Antriebseinheit ausgeführten Schnappverschluss handeln. Eine Antriebseinheit 4, 5 wird auf diese Schiene aufgesetzt und in die bestimmungsgemäße Position (nicht dargestellt) verbracht, wo sie z.B. mittels eines Schnappverschlusses einrastet. Zum Lösen dieser Verbindung sind z.B. Hebelmittel (nicht dargestellt) vorhanden, mittels welchen der Verschluss entriegelt werden kann.
Zweckmäßig sind an der Antriebseinheit 4, 5 und am Rumpf 2 des Luftfahrzeugs 1 entsprechende Vorrichtungen vorgesehen, welche zur Herstellung einer lösbaren Verbindung ineinander greifen und einrasten.

Zur Herstellung der Verbindung von elektrischen Versorgungs- und Datenleitungen sowie Kraftstoffleitungen zwischen dem Rumpf 2 des Luftfahrzeugs 1 und einer Antriebseinheit 4, 5 sind zweckmäßig Buchse-Stecker-Anordnungen (nicht dargestellt) vorhanden. Diese Buchse-Stecker-Anordnung sind zweckmäßig so ausgelegt, daß sie in der bestimmungsgemäßen Position der Antriebseinheit 4, 5 ineinander einrasten. Zweckmäßig befindet sich die Buchsenanordnung antriebsseitig und die Steckeranordnung rumpfseitig. Auch hier sind zum Lösen der Verbindung z.B. Hebelmittel (nicht dargestellt) vorhanden, mittels welchen der Buchse-Stecker-Verbindung entriegelt werden kann.

Selbstverständlich sind aber auch andere Anordnungen denkbar, welche lösbare Verbindungen zwischen Kraftstoffleitungen und elektrischen Leitungen herstellen können.

Die für hohe Leistung ausgelegte 2-Triebwerks-Konfiguration kann durch Entfernen einer Antriebseinheit 4, 5 für Missionsaufgaben mit hoher Standzeit und zusätzlicher Nutzlast angepasst werden.

Fig. 2 zeigt in einer weiteren Ausführungsform der Erfindung eine Variante, bei welcher eine Antriebseinheit (Antriebsmodul) durch ein Leermodul 13 ersetzt wurde. Beispielhaft wurde die Antriebseinheit 5 auf der Unterseite des Luftfahrzeugs 1 aus Fig. 1 durch das Leermodul 13 ersetzt.

Das Leermodul 13 kann z.B. Raum bieten für weitere elektrische Komponenten für z.B. Aufklärungsmissionen. Das Leermodul 13 kann aber auch lediglich als Abdeckung der Einbuchtung 12 dienen.

Innerhalb des Rumpfes 2 des Luftfahrzeugs 1 sind z.B. Stromaggregate (Batterien), Steuerungskomponenten, Treibstofftanks, Lande- und/oder Bremsfallschirm sowie weitere Nutzlast in Form von elektrischen Komponenten zur Erfüllung der bestimmungsgemäßen Mission des Luftfahrzeugs als Aufklärungs- oder Zieldarstellungsdrohne verbracht.

## Patentansprüche

1. Luftfahrzeug mit einer ersten Antriebseinheit (4) mit einem Lufteinlass (10) oberhalb des Rumpfes (2) des Luftfahrzeugs (1) und einer zweiten Antriebseinheit (5) mit einem Lufteinlass (10) unterhalb des Rumpfes (2) des Luftfahrzeug (1) , wobei
während des Betriebs der Antriebseinheiten (4, 5) sind die erste und zweite Antriebseinheit (4 , 5) in den vorgesehenen Positionen (6, 7) übereinander in der von der Längs- und Hochachse des Luftfahrzeugs (1) aufgespannten Ebene angeordnet sind, **dadurch gekennzeichnet, dass** am Rumpf des Luftfahrzeugs (1) Einbuchtungen (12) zur Aufnahme der Antriebseinheiten (4, 5) vorhanden sind.

2. Luftfahrzeug nach Anspruch 1,
**dadurch gekennzeichnet, dass**
die erste und zweite Antriebseinheit (4, 5) identisch sind.

3. Luftfahrzeug nach Anspruch 2,
**dadurch gekennzeichnet, dass**
die erste und zweite Antriebseinheit (4, 5) symmetrisch zu einer Ebene angeordnet sind, in welcher die Hochachse des Luftfahrzeugs (1) die Flächennormale bildet.

4. Luftfahrzeug nach Anspruch 1,
**dadurch gekennzeichnet, dass**
die erste und zweite Antriebseinheit (4, 5) lösbar mit dem Rumpf (2) des Luftfahrzeugs (1) verbunden sind.

5. Luftfahrzeug nach Anspruch 4,
**dadurch gekennzeichnet, dass**
am Rumpf (2) des Luftfahrzeugs (1) Mittel (8) zur Halterung der Antriebseinheiten (4, 5) und Mittel (9) zur Herstellung einer Verbindung von elektrischen Versorgungs- und Datenleitungen sowie Kraftstoffleitungen zwischen dem Rumpf (2) des Luftfahrzeugs (1) und den Antriebseinheiten (4, 5) vorgesehen sind, wobei das Befestigungsmittel (8) und Verbindungsmittel (9) am Rumpf (2) des Luftfahrzeugs (1) Vorrichtungen sind, welche jeweils in eine an der Antriebseinheit (4, 5) vorgesehene Vorrichtung zur Herstellung einer lösbaren Verbindung ineinander einrasten.

6. Luftfahrzeug nach Anspruch 5,
**dadurch gekennzeichnet, dass**
das Befestigungsmittel (8) eine Führungsschiene ist.

7. Luftfahrzeug nach Anspruch 5 oder 6,
**dadurch gekennzeichnet, dass**
zur Herstellung einer lösbaren Verbindung von elektrischen Versorgungs- und Datenleitungen sowie Kraftstoffleitungen zwischen der Antriebseinheit (4, 5) und dem Rumpf (2) des Luftfahrzeugs (1) eine Buchse-Stecker-Anordnung vorgesehen ist, wobei am Luftfahrzeug (1) eine Steckeranordnung befestigt ist, in welche eine an der Antriebseinheit (1) vorgesehene Buchsenanordnung einrastet, wenn sich die Antriebseinheit (4, 5) in einer bestimmungsgemäßen Position befindet.

## Claims

1. Aircraft having a first propulsion unit (4) with an air inlet (10) above the fuselage (2) of the aircraft (1) and having a second propulsion unit (5) with an air inlet (10) below the fuselage (2) of the aircraft (1), wherein, during the operation of the propulsion units (4, 5), the first and second propulsion units (4, 5) are arranged in the designated positions (6, 7) one above the other in the plane defined by the longitudinal and vertical axes of the aircraft (1), **characterized in that** the fuselage of the aircraft (1) has recesses (12) for accommodating the propulsion units (4, 5).

2. Aircraft according to Claim 1, **characterized in that** the first and second propulsion units (4, 5) are identical.

3. Aircraft according to Claim 2, **characterized in that** the first and second propulsion units (4, 5) are arranged symmetrically with respect to a plane in which the vertical axis of the aircraft (1) forms the surface normal.

4. Aircraft according to Claim 1, **characterized in that** the first and second propulsion units (4, 5) are connected releasably to the fuselage (2) of the aircraft (1).

5. Aircraft according to Claim 4, **characterized in that** the fuselage (2) of the aircraft (1) is provided with means (8) for securing the propulsion units (4, 5) and with means (9) for producing a connection of electric supply and data lines and fuel lines between the fuselage (2) of the aircraft (1) and the propulsion units (4, 5), the fastening means (8) and connecting means (9) on the fuselage (2) of the aircraft (1) being devices which each latch into one another in a device which is provided on the propulsion unit (4, 5) and is intended for producing a releasable connection.

6. Aircraft according to Claim 5, **characterized in that** the fastening means (8) is a guide rail.

7. Aircraft according to Claim 5 or 6, **characterized in that** a plug and socket arrangement is provided for the production of a releasable connection of electric supply and data lines and fuel lines between the propulsion unit (4, 5) and the fuselage (2) of the aircraft (1), a plug arrangement being fastened to the aircraft (1) and a socket arrangement provided on the propulsion unit (1) latching into said plug arrangement when the propulsion unit (4, 5) is in a correct position.

## Revendications

1. Aéronef comprenant une première unité d'entraînement (4) avec une admission d'air (10) au-dessus du fuselage (2) de l'aéronef (1) et une deuxième unité d'entraînement (5) avec une admission d'air (10) en dessous du fuselage (2) de l'aéronef (1),
la première et la deuxième unité d'entraînement (4, 5), pendant le fonctionnement des unités d'entraînement (4, 5), étant disposées dans les positions prévues (6, 7) l'une au-dessus de l'autre dans le plan tendu par l'axe longitudinal et l'axe vertical de l'aéronef (1), **caractérisé en ce que** des renfoncements (12) pour recevoir les unités d'entraînement (4, 5) sont prévus sur le fuselage de l'aéronef (1) .

2. Aéronef selon la revendication 1,
**caractérisé en ce que**
la première et la deuxième unité d'entraînement (4, 5) sont identiques.

3. Aéronef selon la revendication 2,
**caractérisé en ce que**
la première et la deuxième unité d'entraînement (4, 5) sont disposées de manière symétrique par rapport à un plan dans lequel l'axe vertical de l'aéronef (1) forme la normale à la surface.

4. Aéronef selon la revendication 1, **caractérisé en ce que**
la première et la deuxième unité d'entraînement (4, 5) sont connectées de manière amovible au fuselage (2) de l'aéronef (1).

5. Aéronef selon la revendication 4,
**caractérisé en ce que**
des moyens (8) sont prévus pour retenir les unités d'entraînement (4, 5) sur le fuselage (2) de l'aéronef (1) et des moyens (9) sont prévus pour établir une connexion de conduites d'alimentation électrique et de données ainsi que de conduites de carburant entre le fuselage (2) de l'aéronef (1) et les unités d'entraînement (4, 5), le moyen de fixation (8) et le moyen de connexion (9) sur le fuselage (2) de l'aéronef (1) sont des dispositifs qui s'encliquètent l'un dans l'autre à chaque fois dans un dispositif prévu sur l'unité d'entraînement (4, 5) pour établir une connexion amovible.

6. Aéronef selon la revendication 5,
**caractérisé en ce que**
le moyen de fixation (8) est un rail de guidage.

7. Aéronef selon la revendication 5 ou 6, **caractérisé en ce que**
pour établir une connexion amovible de conduites d'alimentation électrique et de données ainsi que de conduites de carburant entre l'unité d'entraînement (4, 5) et le fuselage (2) de l'aéronef (1), on prévoit un agencement de connecteur à fiche et douille, un agencement de connecteur à fiche étant fixé sur l'aéronef (1) dans lequel s'encliquète un agencement de douille prévu sur l'unité d'entraînement (1), lorsque l'unité d'entraînement (4, 5) se trouve dans une position conforme.
